# EUROPÄISCHE PATENTSCHRIFT

(11) **EP 1 826 064 B1**
(45) Veröffentlichungstag und Bekanntmachung des Hinweises auf die Patenterteilung: **23.04.2008**
(21) Anmeldenummer: 07002278.5
(22) Anmeldetag: 02.02.2007
(51) Int. Cl.: B60R 5/04

(54) **Kraftfahrzeuginnenraum mit einem Raumausschnitt**
Vehicle interior with a compartment
Intérieur de véhicule avec un compartiment

(30) Priorität: 28.02.2006 DE 102006010114
(43) Veröffentlichungstag der Anmeldung: 29.08.2007
(62) Teilanmeldung aus: 07024092.4
(73) Patentinhaber: BOS GmbH & Co. KG, 73760 Ostfildern (DE)
(72) Erfinder: Krause, Beate, 73635 Rudersberg-Michelau (DE); Münchenberg, Mathias, 73770 Denkendorf (DE)
(74) Vertreter: Patentanwälte Ruff, Wilhelm, Beier, Dauster & Partner

(56) Entgegenhaltungen:
- EP-A2- 1 177 948
- EP-A2- 1 243 474
- DE-A1- 10 348 890

## Beschreibung

Die Erfindung betrifft einen Kraftfahrzeuginnenraum mit einem Raumausschnitt, der durch ein flexibles Flächengebilde in einer ausgezogenen Schutzposition überdeckbar ist, wobei das Flächengebilde an seinem in Auszugrichtung vorderen Stirnendbereich mit einem formstabilen Auszugprofil versehen ist, das auf gegenüberliegenden Seiten in kraftfahrzeugseitigen Führungen längs der Führungen verschiebbar gelagert ist, und das in wenigstens einer Ausziehposition mittels wenigstens eines Blockierelementes sicherbar ist.

Ein derartiger Kraftfahrzeuginnenraum ist aus der DE 103 48 890 A1 bekannt. Der bekannte Kraftfahrzeuginnenraum weist eine Laderaumfunktionseinrichtung auf, die in Form einer Laderaumabdeckung ausgebildet ist. Etwa auf Höhe einer Fahrzeugbrüstung ist in einem Laderaum des Kraftfahrzeuginnenraums ein Kassettengehäuse angeordnet, das sich in Fahrzeugquerrichtung hinter einer Rückenlehnenanordnung einer Fondsitzbank erstreckt und laderaumseitig befestigt ist. In dem Kassettengehäuse ist eine Wickelwelle drehbar gelagert, auf der ein flexibles Flächengebilde auf- und abwickelbar gehalten ist. Das flexible Flächengebilde ist an seinem in Auszugrichtung vorderen Stirnendbereich mit einem formstabilen Auszugprofil versehen, das mit seinen gegenüberliegenden Seitenbereichen in laderaumseitigen Führungen geführt ist. Die laderaumseitigen Führungen erstrecken sich ebenfalls etwa auf Höhe einer Seitenbrüstung längs der gegenüberliegenden Seitenwandungen des Laderaumes und sind als Führungsschienen ausgebildet. Das Auszugprofil weist an seinen gegenüberliegenden Seitenbereichen zapfenartige Führungselemente auf, die in den Führungsschienen längsverlagerbar geführt sind.

Aufgabe der Erfindung ist es, einen Kraftfahrzeuginnenraum der eingangs genannten Art zu schaffen, der eine sichere und verschleißarme Führung des Auszugprofiles längs des entsprechenden Raumausschnittes ermöglicht.

Diese Aufgabe wird dadurch gelöst, dass jede kraftfahrzeugseitige Führung aus mehreren Profilteilen aufgebaut ist, die einander quer zur Führungsrichtung zumindest abschnittsweise überlagern, und die sich in Führungsrichtung jeweils einteilig über die Länge der Führung erstrecken. Dadurch, dass die Profilteile über die Länge der Führungen durchgängig einteilig ausgeführt sind und sich lediglich quer zur Führungsrichtung ergänzen, ergeben sich keine Absätze, Trennfugen oder ähnliches im Führungsbereich, so dass das Auszugprofil über die gesamte Führungslänge gleichmäßig geführt ist. Verschleißerscheinungen am Auszugprofil oder an den Profilteilen werden dadurch reduziert.

Die erfindungsgemäße Lösung ist in besonders vorteilhafter Weise für eine Laderaumabdeckung eines Laderaumabschnittes innerhalb des Kraftfahrzeuginnenraumes vorgesehen, wobei die Laderaumabdeckung sich in ihrer ausgezogenen Schutzposition etwa auf Brüstungshöhe des Kraftfahrzeugs und etwa horizontal durch den Laderaum hindurch erstreckt. Es ist aber auch möglich, als Raumausschnitt im Sinne der Erfindung Fensterscheiben, Schiebe- oder Hubdächer oder ähnliches vorzusehen, so dass das flexible Flächengebilde auch als Sonnenschutzrollo ausgebildet sein kann. Schließlich ist es möglich, als Raumausschnitt des Kraftfahrzeuginnenraumes den Übergangsbereich zwischen Laderaum und Fahrgastraum, vorzugsweise zwischen Fahrzeugseitenwandungen, Dachhimmel und Oberkanten von Rückenlehnen der Fondsitze, vorzusehen. Bei letzterem Fall ist das flexible Flächengebilde dann als Trennnetz etwa vertikal zwischen Dachhimmel und Rückenlehne aufspannbar. Die einander quer zur Führungsrichtung überlagernden Profilteile bilden zumindest im Wesentlichen einen mehrschaligen Aufbau, wobei die einzelnen Profilteile unterschiedliche Funktionen für die Führung definieren.

Die der Erfindung zugrundeliegende Aufgabe wird auch dadurch gelöst, dass jede Führung eine zu einer Fahrzeugmitte hin offene Führungsfläche und parallel hinter der Führungsfläche eine gegenüber der Führungsfläche vertiefte Funktionsnut aufweist, der das wenigstens eine Blockierelement zugeordnet ist. Dadurch sind Teile oder Einzelteile, die der Funktionsnut zugeordnet sind, weitgehend unsichtbar und geschützt angeordnet.

In Ausgestaltung der Erfindung ist das Blockierelement in einer vertieften Aussparung der Funktionsnut angeordnet, und dem Auszugprofil ist für jedes Blockierelement ein zwischen einer Freigabeposition und einer Blockierposition beweglich gelagertes Riegelelement zugeordnet, das in der Blockierposition das Blockierelement formschlüssig hintergreift. Durch die gegenüber der Führungsnut vertiefte Anordnung des Blockierelementes ist dieses weitgehend verdeckt und unsichtbar angeordnet. Die Blockierung des Auszugprofiles erfolgt beim Überfahren des Blockierelementes dadurch, dass ein entsprechendes, am Auszugprofil beweglich gelagertes Riegelelement in seine das Blockierelement hintergreifende Position überführt wird.

In weiterer Ausgestaltung der Erfindung sind die Riegelelemente beidseitig des Auszugprofiles durch ein gemeinsames Betätigungsglied synchron ansteuerbar. Dadurch kann mittels eines einzelnen Betätigungsgliedes eine gleichzeitige Bewegung beider Riegelelemente erreicht werden.

In weiterer Ausgestaltung der Erfindung sind die Blockierelemente in Bewegungsrichtung des Auszugprofiles gegen Federkraft begrenzt längsverlagerbar. Dadurch ist es vorteilhaft möglich, das flexible Flächengebilde in der ausgezogenen Schutzposition auf Zug zu belasten und so gestrafft zu halten.

In weiterer Ausgestaltung der Erfindung weist jedes Blockierelement an seiner der Führungsnut zugewandten Seite eine Blockiernase auf, und das zugehörige Riegelelement des Auszugprofiles ist schwenkbeweglich gelagert und mit einem hakenartigen Kopf versehen, der derart auf die Blockiernase abgestimmt ist, dass er in der Blockierposition die Blockiernase zumindest abschnittsweise umgreift. Vorzugsweise ist der hakenartige Kopf schwalbenschwanz- oder gabelartig gestaltet, so dass die Rastnase flankierend umschlossen werden kann. Die schwalbenschwanz- oder gabelartige Gestaltung ermöglicht zudem eine Zentrierund Steuerfunktion, indem das Riegelelement an der entsprechenden Rastnase zentriert und demzufolge eingesteuert werden kann.

In weiterer Ausgestaltung der Erfindung weist ein dem flexiblen Flächengebilde benachbartes, als Führungsprofil dienendes Profilteil als Führungsfläche eine stegartig überhöhte Lauffläche für eine gleitende Auflage eines Seitenbereiches des Auszugprofiles auf. Durch die stegartige Lauffläche wird die Auflagefläche für den Seitenbereich des Auszugprofiles relativ schmal gestaltet. Die stegartige Überhöhung ermöglicht zudem eine kopfartige Gestaltung des Seitenbereiches, so dass das Auszugprofil in Querrichtung des Flächengebildes durch die stegartige Überhöhung in der Führungsnut formschlüssig zurückgehalten werden kann.

In weiterer Ausgestaltung der Erfindung weist das Material des Profilteiles einen geringen Reibungskoeffizienten auf. Dadurch wird die Gleitreibung zwischen dem Seitenbereich des Auszugprofiles und der Lauffläche des Führungsprofils weiter reduziert. Eine besonders gute Leichtgängigkeit der Längsverlagerung des Auszugprofiles kann erreicht werden.

In weiterer Ausgestaltung der Erfindung ist ein weiteres, als Funktionsprofil dienendes Profilteil mit einer gegenüber der Lauffläche des ersten Profilteils vertieft angeordneten Funktionsnut versehen, in der die Aussparung für das Blockierelement vorgesehen ist. In weiterer Ausgestaltung ist ein das weitere Profilteil gegenüberliegend zu dem ersten Profilteil flankierendes drittes Profilteil als Versteifungsprofil ausgebildet, das das weitere Profilteil im Bereich der Funktionsnut stützt.

Alle Profilteile weisen somit jeweils eigenständige Funktionen auf, die sich in der Gesamtanordnung zueinander ergänzen, so dass sich insgesamt eine stabile und verwindungssteife Führung mit guten Laufeigenschaften für das Auszugprofil ergibt. Dadurch, dass die stegartig überhöhte Lauffläche sich auf der dem Flächengebilde zugewandten Frontseite der Führung befindet, ist die dahinterliegende Funktionsnut zumindest teilweise verdeckt angeordnet, so dass zum Flächengebilde hin und damit vom Kraftfahrzeuginnenraum aus sichtbar lediglich ein schmaler Schlitz erkennbar ist.

In weiterer Ausgestaltung der Erfindung sind alle drei Profilteile schalenförmig in Querrichtung des Flächengebildes aneinandergefügt. Vorzugsweise können die drei Profilteile zu einer Vormontageeinheit zusammengefügt und als vormontierte Einheit im Laderaum bzw. im Kraftfahrzeuginnenraum montiert werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in perspektivischer Darstellung einen Ausschnitt eines Kraftfahrzeuginnenraumes eines Personenkraftwagens,
- Fig. 2: in schematischer Seitenansicht die Ausführungsform gemäß Fig. 1,
- Fig. 3: in vergrößerter, schematischer Querschnittdarstellung eine Führung für eine Laderaumabdeckung nach den Fig. 1 und 2,
- Fig. 4: in perspektivischer, teilweise ausgeschnittener Darstellung eine aus mehreren Profilteilen zusammengesetzte Führung ähnlich Fig. 4,
- Fig. 5: die Führung nach Fig. 4 in ausschnittsweiser Darstellung und in vergrößertem Maßstab,
- Fig. 6: in schematischer perspektivischer Darstellung einen Ausschnitt der Führung der Laderaumabdeckung in dem Kraftfahrzeuginnenraum nach den Fig. 1 und 2 und
- Fig. 7 bis 9: in schematischer, aufgeschnittener Seitendarstellung verschiedene Momentanpositionen der Laderaumabdeckung in der Führung kurz vor sowie nach Erreichen einer ausgezogenen Schutzposition.

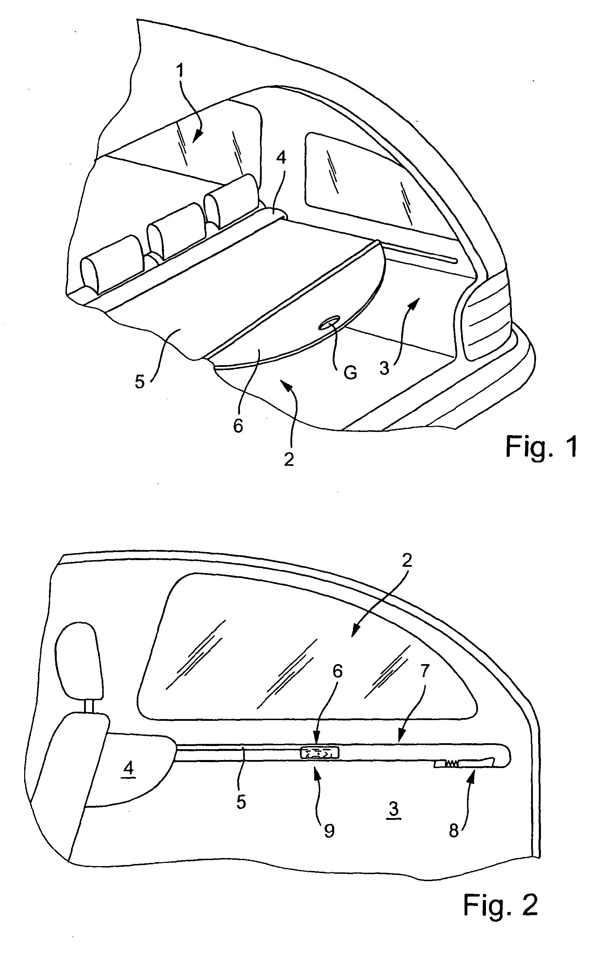

Ein Kraftfahrzeug nach den Fig. 1 und 2 stellt einen Personenkraftwagen dar, dessen Kraftfahrzeuginnenraum 1 in einen in einem vorderen Bereich vorgesehenen Fahrgastraum und in einen heckseitig vorgesehenen Laderaum 2 unterteilt ist. Der Laderaum 2 geht offen in den Fahrgastraum über. Der Laderaum 2 ist in normaler Fahrtrichtung gesehen nach vorne durch eine Rückenlehnenanordnung einer Fondsitzbank begrenzt. Auf gegenüberliegenden Seiten ist der Laderaum 2 durch zwei Seitenwandungen 3 begrenzt und nach hinten schließt der Laderaum 2 an einer nicht dargestellten Heckklappe ab.

Etwa auf Höhe einer Fahrzeugbrüstung ist hinter der Rückenlehnenanordnung der Fondsitzbank ein Kassettengehäuse 4 vorgesehen, das sich über die gesamte Breite des Laderaumes 2 in Fahrzeugquerrichtung erstreckt. In dem Kassettengehäuse 4 ist eine Wickelwelle drehbar gelagert, auf der ein flexibles Flächengebilde 5 auf- und abwickelbar gehalten ist. Das flexible Flächengebilde 5 dient beim dargestellten Ausführungsbeispiel zur etwa horizontalen Abdeckung des Laderaumes 2 und ist aus einem blickdichten, ein- oder mehrschichtigen Bahnmaterial hergestellt. Das Bahnmaterial weist vorzugsweise wenigstens eine Bahnschicht aus einem textilen Gewebe oder Gewirke auf, das aus Kunststoff- und/oder aus Textilfasern hergestellt ist.

Die Wickelwelle ist in Aufwickelrichtung durch eine Wickelfederanordnung belastet, so dass auf das Flächengebilde 5 in Aufwickelrichtung eine permanente Zugkraft ausgeübt wird. An einem in Auszugrichtung vorderen Stirnendbereich des Flächengebildes 5 ist ein formstabiles Auszugprofil 6 vorgesehen, das bei der Ausführungsform nach Fig. 1 mit einem Konturteil versehen ist, das auf die Innenkontur des Laderaumes im Heckbereich abgestimmt ist. Das Konturteil ist mit einem Griffelement G versehen, das ein Ergreifen des Auszugprofils 6 und damit des Flächengebildes 5 von Hand ermöglicht.

Das Auszugprofil 6 erstreckt sich über die gesamte Breite des Laderaumes 2 und ragt an seinen gegenüberliegenden Seitenbereichen durch Führungselemente 9 in Form von Führungsfortsätzen über einen jeweiligen Seitenrand des Flächengebildes 5 seitlich, d.h. quer zur Auszugrichtung des Flächengebildes 5 nach außen ab. Diese Führungselemente 9 sind auf jeder Fahrzeugseite in entsprechenden Führungen 7 der jeweiligen Seitenwandung 3 des Kraftfahrzeuginnenraumes längsverschiebbar geführt. Die Führungen 7 weisen eine Länge auf, die etwa dem Ausziehweg des Auszugprofils 6 zwischen einer aufgewickelten Ruheposition des Flächengebildes 5 und der ausgezogenen Schutzposition des Flächengebildes 5 entspricht, in der das Flächengebilde 5 mit seinem Auszugprofil 6 bis in den Heckbereich des Laderaumes 2 ausgezogen und dort festgelegt ist.

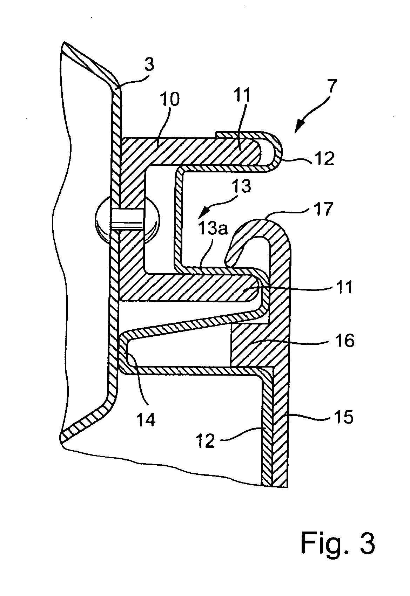

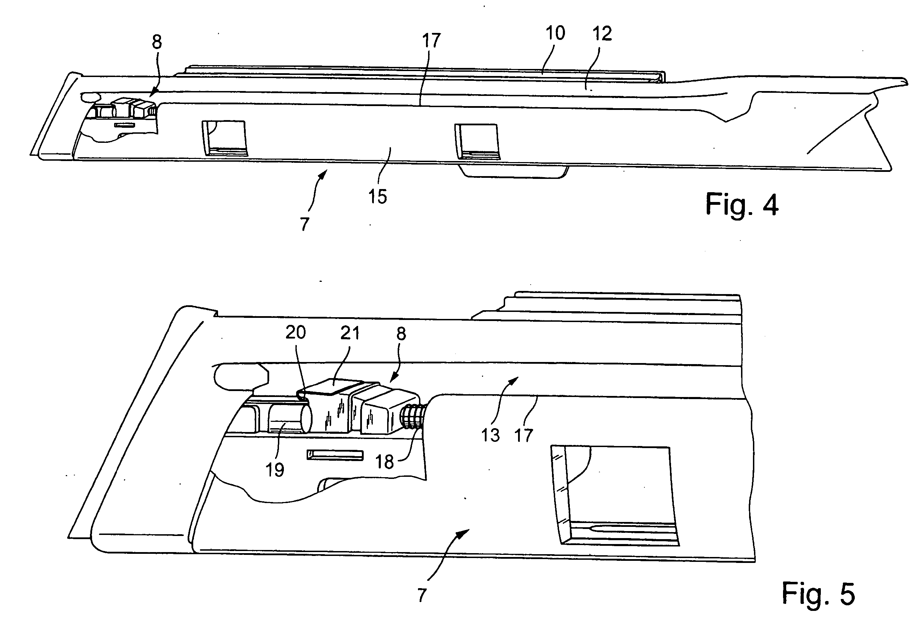

Jede Führung 7 ist als mehrteiliges Führungsprofil ausgeführt (Fig. 3 bis 5) und ist karosserieseitig an der jeweiligen Seitenwandung 3 befestigt. Vorzugsweise ist die jeweilige Führung 7 direkt an einem Seitenteil der Karosserietragstruktur der Seitenwandung 3 befestigt, um eine stabile und vorzugsweise crashsichere Anbindung der Führung 7 an der Fahrzeugkarosserie zu ermöglichen.

Wie anhand der Fig. 3 gut erkennbar ist, ist jede der beiden Führungen 7, die an den jeweils gegenüberliegenden Seitenwandungen 3 des Laderaumes 2 angebracht sind, dreiteilig aufgebaut. Der dreiteilige Aufbau wird durch drei Profilteile 15, 12, 10 gebildet, die sich jeweils einteilig durchgängig über die gesamte Führungslänge der Führung 7 für das Auszugprofil 9 erstrecken und quer zur Führungsrichtung für das Auszugprofil 9 miteinander verbunden sind. Ein erstes, zur Laderaummitte hin gewandtes Profilteil 15 dient als Führungsprofil und bildet den zur Laderaummitte hin gewandten frontseitigen Abschluss der Führung 7. Ein mittleres Profilteil 12 dient als Funktionsprofil und weist eine C-artig zur Laderaummitte hin offene Funktionsnut 13 auf, die sich über die gesamte Führungslänge des Auszugprofils 6 erstreckt. Das als Führungsprofil dienende erste Profilteil 15 weist in seinem oberen Bereich als Führungsfläche eine stegartig gestaltete Gleitprofilierung 17 auf, die die offene Funktionsnut 13 über deren gesamte Länge teilweise verdeckt. Die stegartige Gleitprofilierung 17 wird durch einen hakenartig zur Funktionsnut 13 nach außen gekrümmten Profilquerschnitt gebildet, dessen Breite wesentlich geringer ist als die Tiefe der Funktionsnut 13 - in horizontaler Richtung gesehen.

Alle Profilteile 10, 12, 15 sind vorzugsweise aus geeigneten Kunststoffmaterialien hergestellt. Es ist aber auch möglich, ein oder mehrere Profilteile aus anderen geeigneten Materialien herzustellen.

Das dritte, nach außen zur Karosserietragstruktur gerichtete Profilteil 10 ist als C-förmiges Versteifungsprofil ausgeführt und weist zwei Profilschenkel 11 auf, die die Funktionsnut 13 und damit den entsprechenden Profilabschnitt des Profilteiles 12 oben und unten flankieren. Durch dieses Versteifungsprofil ist es möglich, das als Funktionsprofil dienende Profilteil 12 relativ dünn auszuführen. Das als Versteifungsprofil dienende Profilteil 10 ist mittels entsprechender Befestigungselemente mit entsprechenden Tragstrukturabschnitten der Fahrzeugkarosserie fest verbunden. Zudem weist das mittlere Profilteil 12 einen durchgängigen Profilsteg unterhalb der Funktionsnut 13 auf, der sich ebenfalls an einem entsprechenden Tragstrukturabschnitt der Kraftfahrzeugkarosserie abstützt und mittels entsprechender Befestigungselemente mit diesem fest verbunden ist. Anstelle eines durchgängigen Stützsteges 14 können auch mehrere domartige Stützstege vorgesehen sein, die über die Länge der Führung 7 verteilt angeordnet sind. Das frontseitige Profilteil 15 ist mit einem Stegabschnitt 16 auf Höhe des Stützsteges 14 versehen, der in den V-förmig hohlprofilierten Stützsteg 14 hineinragt. Es ist möglich, auf Höhe des Stegabschnittes 16 und auf Höhe des Stützsteges 14 gemeinsame Befestigungsmittel vorzusehen, die beide Profilteile mit dem entsprechenden Tragstrukturabschnitt der Kraftfahrzeugkarosserie verbinden. Unterhalb der Gleitprofilierung 17 bildet die Frontseite des Profilteiles 15, die zur Laderaummitte hin gewandt ist, eine im Wesentlichen glattflächige, in montiertem Zustand vertikal ausgerichtete Verblendung. Diese kann räumlich und/oder optisch in eine Seitenverkleidung der Seitenwandung 3 integriert sein. Die einzelnen Profilteile, die schalenförmig in- oder aneinandergefügt sind, können durch mechanische Rastmittel oder auch durch stoffschlüssige Verbindungsmittel miteinander verbunden sein. Die mechanischen Rastmittel sind vorzugsweise einstückig an den entsprechenden Profilteilen angeformt.

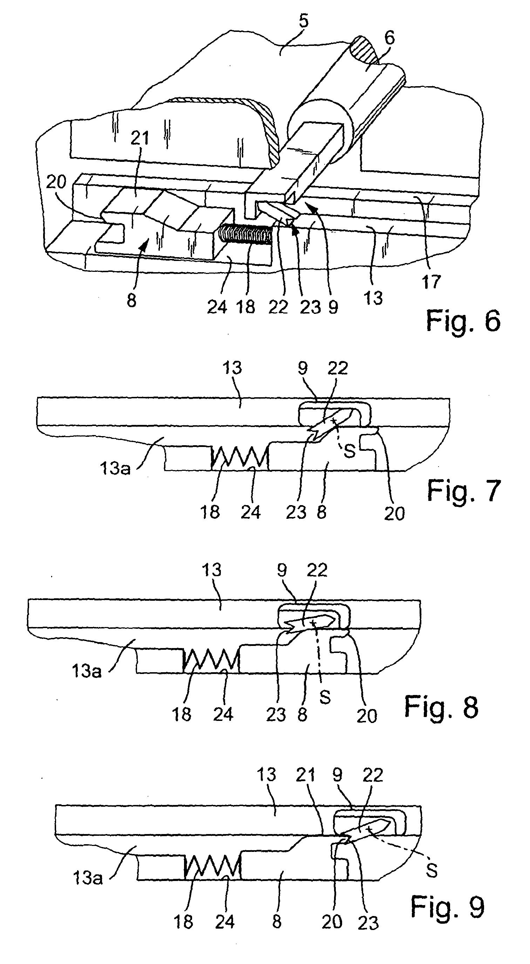

Der zwischen der Gleitprofilierung 17 und einer Oberkante der Funktionsnut 13 verbleibende Spalt ist derart auf die Höhe des jeweiligen Führungselementes 9 des Auszugprofils 6 abgestimmt, dass dieses mit geringem Spiel in dem Führungsschlitz längsbewegt werden kann. Das Führungselement 9 weist eine Breite auf, die es ihm ermöglicht, in nahezu die gesamte horizontale Tiefe der Funktionsnut 13 einzugreifen. Mittels eines nicht näher dargestellten Gleitabschnittes gleitet das Führungselement 9 auf der Gleitprofilierung 17. Seitlich versetzt zu dem Gleitabschnitt ist das Führungselement 9 mit einem Arretiermittel in Form eines Riegelelementes 22 versehen, das um eine Schwenkachse S begrenzt schwenkbeweglich an dem Führungselement 9 gelagert ist. Die Schwenkachse S erstreckt sich in Längsrichtung des Auszugprofils 6 und damit quer zur Längserstreckung des Flächengebildes 5. Das Führungselement 9 ist im Bereich des Riegelelementes 22 derart ausgespart, dass das Riegelelement 22 räumlich bündig in diese Aussparung eintauchen kann. Das Führungselement 9 weist, wie anhand der Fig. 6 bis 9 erkennbar ist, einen etwa rechteckigen Querschnitt auf. Das Riegelelement 22 ist quaderartig ausgeführt und weist an einem Stirnende eine keilförmige Spitze und an dem gegenüberliegenden Stirnende eine schwalbenschwanz- oder gabelartige Profilierung 23 auf. In unbelasteter Ruhestellung ragt das Riegelelement 22 gemäß Fig. 6 und 7 schräg nach unten, wobei sich seine keilförmige Spitze an einer entsprechenden Wandung der Aussparung des Führungselementes 9 abstützt. Die Breite des Riegelelementes 22 und die in der Ruheposition nach unten über das Führungselement 9 hinausragende Tiefe sind derart auf einen vertieften Nutabschnitt 13a der Funktionsnut 13 abgestimmt, dass das Riegelelement 22 in der schräg gerichteten Stellung in dem vertieften Nutabschnitt 13a vorzugsweise ohne gleitende Anlage entlangbewegt werden kann. In vorteilhafter Weise ragt das Riegelelement 22 in dieser unbelasteten und am Führungselement 9 abgestützten Ruhestellung berührungslos in den vertieften Nutabschnitt 13a hinein. Gleichzeitig liegt der Gleitabschnitt des Führungselements 9 während der gesamten Bewegung auf der Gleitprofilierung 17 des Profilteiles 15 auf.

Im Bereich des vertieften Nutabschnittes 13a ist auf Höhe einer ausgezogenen Schutzposition des Auszugprofils 6 und damit in einem heckseitigen Endbereich des Laderaumes 2 eine vertiefte Aussparung 24 vorgesehen, in der ein Blockierelement 8 angeordnet ist. Das Blockierelement 8 weist eine Breite auf, die vorteilhaft nicht größer ist als die Breite des vertieften Nutabschnittes 13a. Zudem ist das Blockierelement kürzer als die Länge der Aussparung 24 ausgeführt, so dass es begrenzt längsbeweglich in der Aussparung 24 gehalten ist. Das Blockierelement 8 ist durch eine Rückstellfederanordnung 18 in Auszugrichtung des Flächengebildes 5 und des Auszugprofils 6 druckbelastet, so dass es in unbelasteter Position permanent gegen einen in der Aussparung 24 vorgesehenen Anschlag 19 gedrückt gehalten ist. Das Blockierelement 8 ist demzufolge in Längsrichtung des vertieften Nutabschnittes begrenzt längsbeweglich gelagert, wobei das Blockierelement 8 parallel unterhalb des Nutabschnittes 13a angeordnet ist. Die Höhe des Blockierelementes 8 ist derart auf die Aussparung 24 abgestimmt, dass eine Oberkante des Blockierelementes 8 zumindest im Wesentlichen bündig mit der durch den Nutabschnitt 13a definierten Ebene abschließt. Das Blockierelement 8 weist an einem in Auszugrichtung des Flächengebildes gesehen oberen Vorderkantenbereich eine Blockiernase 20 auf, die etwa horizontal zum Fahrzeugheck hin abragt. Die Blockiernase 20 ist in ihrer Kontur derart auf die schwalbenschwanz- oder gabelartige Gestaltung des Riegelelementes 22 abgestimmt, dass der gabel- oder schwalbenschwanzartige Kopf 23 des Riegelelementes 22 die Rastnase 20 im Wesentlichen bündig umschließen kann. An die Rastnase 20 anschließend ist die Oberseite des Blockierelementes 8 mit einer Aufgleitfläche 21 versehen, an der das Riegelelement 22 sich aus seiner unbelasteten Ruhelage heraus aufrichten kann, sobald das Auszugprofil mit den entsprechenden Führungselementen 9 über das jeweilige Blockierelement 8 hinweggleitet. Das Riegelelement 22 ist in Richtung seiner unbelasteten Ruhelage federbelastet, so dass sich das Riegelelement 22 nach Überstreichen der Aufgleitfläche 21 automatisch wieder in seine schräggestellte Position zurückbewegt, sobald die Zwangsführung durch das Blockierelement 8 bzw. die Aufgleitfläche 21 aufgehoben ist. Die Rückholkraft der Wickelfederanordnung, die auf das Flächengebilde 5 wirkt, zieht anschließend zwangsläufig das Riegelelement gegen die Rastnase (Fig. 9), so dass eine formschlüssige Blockierung des Auszugprofils und der Führungselemente 9 in der ausgezogenen Schutzposition des Flächengebildes 5 erreicht wird.

Jedes der beiden Führungselemente 9 ist mit einem entsprechenden Riegelelement 22 versehen, die über ein Synchronisiermittel wie eine quer durch das Auszugprofil 6 verlaufende Übertragungsstange oder ähnliches bewegungsübertragend miteinander verbunden sind. Beide Riegelelemente sind gemeinsam schwenkbeweglich durch ein Betätigungselement im Bereich des Griffteiles G, so dass bei einer Betätigung des Betätigungselementes beide Riegelelemente gleichzeitig aus ihrer unbelasteten Ruhelage herausschwenkbar sind. Den Riegelelementen 22 kann eine gemeinsame Rückstellfeder zugeordnet sein, die beide Riegelelemente gleichzeitig und zu gleichen Beträgen belastet. In vorteilhafter Weise weisen die Riegelelemente 22 zudem eine gemeinsame Schwenkachse S auf, wobei das Übertragungsgestänge vorzugsweise als über die gesamte Länge des Auszugprofils durchgängige Welle gestaltet ist, an deren gegenüberliegenden Stirnenden die entsprechenden Riegelelemente angeordnet sind. Das Betätigungselement im Bereich des Griffteiles G kann dann vorzugsweise direkt an dieser Welle angreifen. In gleicher Weise kann auch die Rückstellfederanordnung direkt auf diese Welle wirken.

Die Druckfeder 18 in jeder Führung 7 ist in ihrer Federkraft so gewählt, dass sie größer als die Rückholkraft der Wickelfederanordnung, die auf das Flächengebilde wirkt, ist. Die Druckfeder 18, die jedes Blockierelement 8 in Richtung des Anschlags 19 gedrückt hält, dient somit ergänzend dazu, das Flächengebilde in der ausgezogenen Schutzposition gestrafft zu halten. Zudem dient die Längsbeweglichkeit des Blockierelementes 8 und die entsprechende Druckfeder 18 dazu, Längentoleranzen des Flächengebildes sowie Einbautoleranzen des Kassettengehäuses 4 und der Führungen auszugleichen.

## Patentansprüche

1. Kraftfahrzeuginnenraum mit einem Raumausschnitt, der durch ein flexibles Flächengebilde in einer ausgezogenen Schutzposition überdeckbar ist, wobei das Flächengebilde an seinem in Auszugrichtung vorderen Stirnendbereich mit einem formstabilen Auszugprofil versehen ist, das auf gegenüberliegenden Seiten in kraftfahrzeugseitigen Führungen längs der Führungen verschiebbar gelagert ist, und das in wenigstens einer Ausziehposition mittels wenigstens eines Blockierelementes sicherbar ist, **dadurch gekennzeichnet, dass** jede kraftfahrzeugseitige Führung (7) aus mehreren Profilteilen (15, 12, 10) aufgebaut ist, die einander quer zur Führungsrichtung zumindest abschnittsweise überlagern und die sich in Führungsrichtung jeweils einteilig über die Länge der Führung (7) erstrecken.

2. Kraftfahrzeuginnenraum nach Anspruch 1, **dadurch gekennzeichnet, dass** jede Führung (7) eine zu einer Fahrzeugmitte hin offene Führungsfläche (17) und parallel hinter der Führungsfläche (17) eine gegenüber der Führungsfläche vertiefte Funktionsnut (13, 13a) aufweist, der das wenigstens eine Blockierelement (8) zugeordnet ist.

3. Kraftfahrzeuginnenraum nach Anspruch 2, **dadurch gekennzeichnet, dass** das Blockierelement (8) in einer vertieften Aussparung (24) der Funktionsnut (13, 13a) angeordnet ist, und dass dem Auszugprofil (6) für jedes Blockierelement (8) ein zwischen einer Freigabeposition und einer Blockierposition beweglich gelagertes Riegelelement (22) zugeordnet ist, das in der Blockierposition das Blockierelement (8) formschlüssig hintergreift.

4. Kraftfahrzeuginnenraum nach Anspruch 3, **dadurch gekennzeichnet, dass** die Riegelelemente (22) beidseitig des Auszugprofils (6) durch ein gemeinsames Betätigungsglied synchron ansteuerbar sind.

5. Kraftfahrzeuginnenraum nach einem der vorhergehenden Ansprüche, **dadurch gekennzeichnet, dass** die Blockierelemente (8) in Bewegungsrichtung des Auszugprofils (9) gegen Federkraft begrenzt längsverlagerbar sind.

6. Kraftfahrzeuginnenraum nach einem der vorhergehenden Ansprüche, **dadurch gekennzeichnet, dass** jedes Blockierelement (8) an seiner der Funktionsnut (13, 13a) zugewandten Seite eine Blockiernase (20) aufweist, und dass das zugehörige Riegelelement (22) des Auszugprofils (6) schwenkbeweglich gelagert ist und mit einem hakenartigen Kopf (23) versehen ist, der derart auf die Blockiernase (20) abgestimmt ist, dass er in der Blockierposition die Blockiernase (20) zumindest abschnittsweise umgreift.

7. Kraftfahrzeuginnenraum nach Anspruch 1, **dadurch gekennzeichnet, dass** ein dem flexiblen Flächengebilde (5) benachbartes, als Führungsprofil dienendes Profilteil (15) als Führungsfläche eine stegartig überhöhte Lauffläche (17) für eine gleitende Auflage eines Seitenbereiches (9) des Auszugprofils (6) aufweist.

8. Kraftfahrzeuginnenraum nach Anspruch 7, **dadurch gekennzeichnet, dass** das Material des Profilteils (15) einen geringen Reibungskoeffizienten aufweist.

9. Kraftfahrzeuginnenraum nach Anspruch 1, **dadurch gekennzeichnet, dass** ein weiteres, als Funktionsprofil dienendes Profilteil (12) mit einer gegenüber der Lauffläche (17) des ersten Profilteiles (15) vertieft angeordneten Funktionsnut (13, 13a) versehen ist, in der die Aussparung (24) für das Blockierelement vorgesehen ist.

10. Kraftfahrzeuginnenraum nach Anspruch 1, **dadurch gekennzeichnet, dass** ein das weitere Profilteil (12) gegenüberliegend zu dem ersten Profilteil (15) flankierendes drittes Profilteil (10) als Versteifungsprofil ausgebildet ist, das das weitere Profilteil (12) im Bereich der Funktionsnut stützt.

11. Kraftfahrzeuginnenraum nach Anspruch 1, **dadurch gekennzeichnet, dass** alle drei Profilteile (10, 12, 15) schalenförmig in Querrichtung des Flächengebildes aneinandergefügt sind.

## Claims

1. A motor-vehicle interior with a compartment which can be covered by a flexible planar structure in an extended protective position, wherein the planar structure is provided, on its front end region in the extension direction, with a rigid extension profile which is mounted in guides on opposite sides of the motor vehicle so as to be displaceable along the guides and which is securable in at least one extended position by means of at least one blocking member, **characterised in that** each guide (7) on the motor vehicle is constructed from a plurality of profiled parts (15, 12, 10) which at least partially overlap one another transversely to the guide direction and which, in the guide direction, each extend in one piece over the length of the guide (7).

2. A motor-vehicle interior according to claim 1, **characterised in that** each guide (7) has a guide surface (17) which is open towards the middle of a vehicle and, in a parallel arrangement behind the guide surface (17), has a functional groove (13, 13a) which is recessed in relation to the guide surface and with which the at least one blocking member (8) is associated.

3. A motor-vehicle interior according to claim 2, **characterised in that** the blocking member (8) is arranged in a recessed opening (24) in the functional groove (13, 13a) and **in that**, for each blocking member (8), a locking member (22) mounted so as to be movable between a release position and a blocking position is associated with the extension profile (6) and, in the blocking position, engages positively behind the blocking member (8).

4. A motor-vehicle interior according to claim 3, **characterised in that** the locking members (22) on both sides of the extension profile (6) are synchronously activatable by a common actuating member.

5. A motor-vehicle interior according to any one of the preceding claims, **characterised in that** the blocking members (8) are longitudinally displaceable to a limited extent in the direction of movement of the extension profile (9) against spring force.

6. A motor-vehicle interior according to any one of the preceding claims, **characterised in that** each blocking member (8) has a blocking projection (20) on its side facing the functional groove (13, 13a) and **in that** the associated locking member (22) of the extension profile (6) is pivotably mounted and is provided with a hook-type head (23) which is adapted to the blocking projection (20) in such a way that, in the blocking position, it at least partially engages round the blocking projection (20).

7. A motor-vehicle interior according to claim 1, **characterised in that** a profiled part (15), adjacent to the flexible planar structure (5) and serving as a guide profile, has a rib-like elevated running surface (17) which acts as a guide surface and on which a side region (9) of the extension profile (6) is slidably supported.

8. A motor-vehicle interior according to claim 7, **characterised in that** the material of the profiled part (15) has a low friction coefficient.

9. A motor-vehicle interior according to claim 1, **characterised in that** a second profiled part (12) serving as a functional profile is provided with a functional groove (13, 13a) which is arranged so as to be recessed in relation to the running surface (17) of the first profiled part (15) and in which the opening (24) for the blocking member is provided.

10. A motor-vehicle interior according to claim 1, **characterised in that** a third profiled part (10), which flanks the second profiled part (12) and lies opposite the first profiled part (15), is formed as a stiffening profile which supports the second profiled part (12) in the region of the functional groove.

11. A motor-vehicle interior according to claim 1, **characterised in that** all three profiled parts (10, 12, 15) are joined together in the form of a shell in the transverse direction of the planar structure.

## Revendications

1. Intérieur de véhicule automobile comprenant un compartiment qui peut être recouvert par une structure plane flexible dans une position de protection déployée, la structure plane étant pourvue, au niveau de sa zone d'extrémité frontale avant dans le sens de déploiement, d'un profilé de déploiement indéformable qui est logé sur les côtés opposés dans des guidages situés côté véhicule automobile de manière à pouvoir coulisser le long desdits guidages, et qui dans au moins une position de déploiement peut être arrêté au moyen d'au moins un élément de blocage, **caractérisé en ce que** chaque guidage (7) situé côté véhicule automobile est constitué de plusieurs pièces profilées (15, 12, 10) qui se superposent au moins par sections transversalement par rapport au sens de guidage, et qui s'étendent dans le sens de guidage respectivement d'un seul tenant sur la longueur du guidage (7).

2. Intérieur de véhicule automobile selon la revendication 1, **caractérisé en ce que** chaque guidage (7) comporte une surface de guidage (17) ouverte en direction du milieu d'un véhicule et parallèlement derrière la surface de guidage (17) une rainure fonctionnelle (13, 13a) plus profonde par rapport à la surface de guidage, le au moins un élément de blocage (8) étant associé à ladite rainure.

3. Intérieur de véhicule automobile selon la revendication 2, **caractérisé en ce que** l'élément de blocage (8) est agencé dans un évidement (24) plus profond de la rainure fonctionnelle (13, 13a), et **en ce qu'**un élément de verrouillage (22) logé de manière mobile entre une position de déblocage et une position de blocage est associé au profilé de déploiement (6) pour chaque élément de blocage (8), ledit élément de verrouillage dans la position de blocage venant en prise derrière l'élément de blocage (8) par concordance de forme.

4. Intérieur de véhicule automobile selon la revendication 3, **caractérisé en ce que** les éléments de verrouillage (22) peuvent être commandés de manière synchrone de part et d'autre du profilé de déploiement (6) par l'intermédiaire d'un organe d'actionnement commun.

5. Intérieur de véhicule automobile selon l'une quelconque des revendications précédentes, **caractérisé en ce que** les éléments de blocage (8) peuvent être déplacés longitudinalement de manière limitée contre la force d'un ressort dans le sens de déplacement du profilé de déploiement (9).

6. Intérieur de véhicule automobile selon l'une quelconque des revendications précédentes, **caractérisé en ce que** chaque élément de blocage (8) comporte sur son côté tourné vers la rainure fonctionnelle (13, 13a) un ergot de blocage (20), et **en ce que** l'élément de verrouillage associé (22) du profilé de déploiement (6) est logé à pivotement et est pourvu d'une tête (23) semblable à un crochet, laquelle est adaptée de telle manière à l'ergot de blocage (20) que dans la position de blocage elle entoure, au moins par sections, l'ergot de blocage (20).

7. Intérieur de véhicule automobile selon la revendication 1, **caractérisé en ce qu'**une pièce profilée (15) servant de profilé de guidage, voisine de la structure plane flexible (5) comporte comme surface de guidage une surface de roulement (17) surélevée de manière similaire à une âme pour un appui coulissant d'une zone latérale (9) du profilé de déploiement (6).

8. Intérieur de véhicule automobile selon la revendication 7, **caractérisé en ce que** le matériau de la pièce profilée (15) comporte un faible coefficient de frottement.

9. Intérieur de véhicule automobile selon la revendication 1, **caractérisé en ce qu'**une autre pièce profilée (12) servant de profilé fonctionnel est pourvue d'une rainure fonctionnelle (13, 13a) disposée de manière plus profonde par rapport à la surface de roulement (17) de la première pièce profilée (15), l'évidement (24) pour l'élément de blocage étant prévu dans ladite rainure.

10. Intérieur de véhicule automobile selon la revendication 1, **caractérisé en ce qu'**une troisième pièce profilée (10) flanquant l'autre pièce profilée (12) située en face de la première pièce profilée (15) est formée comme profilé de renforcement, qui soutient l'autre pièce profilée (12) dans la zone de la rainure fonctionnelle.

11. Intérieur de véhicule automobile selon la revendication 1, **caractérisé en ce que** toutes les trois pièces profilées (10, 12, 15) sont jointes en forme de coque dans le sens transversal de la structure plane.
